## Europäisches Patentamt

## European Patent Office

## Office européen des brevets

(11) Veröffentlichungsnummer : **0 024 529**
**B1**

(12) **EUROPÄISCHE PATENTSCHRIFT**

(45) Veröffentlichungstag der Patentschrift :
**09.03.83**

(21) Anmeldenummer : **80104151.8**

(22) Anmeldetag : **16.07.80**

(51) Int. Cl.³ : **B 65 G 67/04**, B 65 B 1/26,
B 60 P 1/60, C 01 B 33/18

(54) **Fahrzeugsilo.**

(30) Priorität : **10.08.79 DE 2932529**

(43) Veröffentlichungstag der Anmeldung :
**11.03.81 Patentblatt 81/10**

(45) Bekanntmachung des Hinweises auf die Patenterteilung : **09.03.83 Patentblatt 83/10**

(84) Benannte Vertragsstaaten :
**BE DE FR GB**

(56) Entgegenhaltungen :
**DE A 1 908 414**
**DE C 480 769**
**DE C 595 796**
**DE C 836 159**
**DE C 893 497**
**GB A 978 886**
**GE A 1 347 431**

**SEIFEN - ÖLE - FETTE - WACHSE, Band 100, Nr. 4, 1974 R. KREUTER « Volumenminderung von Schüttgütern beim Abfüllen mittels eines Durchlaufverdichters » Seiten 101 bis 103.**

(73) Patentinhaber : **Degussa Aktiengesellschaft**
**Weissfrauenstrasse 9**
**D-6000 Frankfurt am Main 1 (DE)**

(72) Erfinder : **Schmitz, Werner**
**Lapshof 4**
**D-6467 Hasselroth 2 (DE)**

Jouve, 18, rue St-Denis, 75001 Paris, France

Fahrzeugsilo

Pyrogen hergestellte Oxide von Metallen oder Metalloiden, wie z. B. $Al_2O_3$, $SiO_2$ oder $TiO_2$ zeichnen sich durch eine extreme Teilchenfeinheit und damit durch ein extrem niedriges Schüttgewicht aus.

So weist z. B. pyrogen hergestelltes Siliciumdioxid je nach Type einen mittleren Teilchendurchmesser in dem Bereich von 5 bis 50 nm auf. Die Stampfdichte des pyrogen hergestellten Siliciumdioxides kann zwischen 40 und 120 g/l liegen.

Aufgrund dieses extrem niedrigen Schüttgewichtes beanspruchen pyrogen hergestellte Oxide von Metallen oder Metalloiden ein großes Transportvolumen.

Eine Verminderung des Transportvolumens durch zum Beispiel Vakuumentlüftung an Entlüfterwalzen vor dem Befüllen des Silofahrzeuges hat den Nachteil, daß bestimmte maximale Werte für die Stampfdichte überschritten werden. Die Folge ist, daß bestimmte anwendungstechnische Eigenschaften, wie z. B. das Verdickungsverhalten nicht mehr den gestellten Anforderungen entspricht.

Ein Transport in Silofahrzeugen ist deshalb nur mit nicht entlüftetem Oxid möglich und daher mit relativ hohen Kosten belastet.

Aus der DE-C-836 159 ist eine Vorrichtung zur Erhöhung des Raumgewichtes pulverförmiger Stoffe unter Anwendung von Vakuum bekannt. Dazu wird ein nur unten offenes Rohr in die Bodenschichten des Pulvers geführt. Ein Fahrzeugsilo zum Befüllen mit staubförmigen Stoffen ist aus der DE-C-480 769 bekannt. Bei diesem wird die Luft oberhalb der eingefüllten Stoffe durch Abschlußstutzen abgesaugt.

Die Erfindung geht von den im Oberbegriff des Anspruchs angegebenen und durch die DE-C-480 769 bekannten Fahrzeugsilos aus.

Die Aufgabe der Erfindung ist es, pyrogen hergestellte Oxide von Metallen oder Metalloiden bei dem Befüllen des Transportfahrzeuges so zu entlüften, daß das Transportvolumen deutlich vermindert wird, ohne daß die anwendungstechnischen Eigenschaften beeinträchtigt werden.

Die Lösung dieser Aufgabe besteht darin, dass die Entlüftungsvorrichtung ein parallel zur Silolängsachse unter Unterdruck stehendes Entlüftungsrohr aufweist, das in seiner Rohrwand mehrere mit einem Filtertuch abgedeckte Öffnungen hat und zum Entfernen der zwischen den Oxidteilchen vorhandenen Luft dient.

Die erfindungsgemäße Ausbildung weist den Vorteil auf, daß das pyrogen hergestellte Metalloid oder Metalloxid in größtmöglicher Dichte in einem Silofahrzeug transportiert werden kann, ohne daß seine anwendungstechnischen Eigenschaften beeinträchtigt werden.

Die Wirkung der erfindungsgemäßen Entlüftungsvorrichtung wird anhand des folgenden Beispiels näher erläutert und beschrieben :

Ein 55 m³ fassender Straßensilowagen wird in angekippter Stellung mit einem pyrogen hergestellten Siliciumdioxid, welches eine mittlere Teilchengröße von 7 nm und eine Stampfdichte von < 50g/l aufweist, aus einem Silo mittels Fluidisierungsluft durch freien Fall in Nähe des oberen Deckels befüllt.

Die aus dem Silo stammende Fluidisierungsluft wird gleichzeitig von der in dem Silobehälter axial angeordneten Entlüftungsleitung abgesaugt.

Nach einer Füllzeit von 60 Minuten ist der Silobehälter des Silofahrzeuges randvoll. Durch Absitzenlassen und weiteres Absaugen der eingeschlossenen Luft wird der freie Raum in dem Silofahrzeug mit pyrogen hergestelltem Siliciumdioxid aufgefüllt.

Nach Abschluß des Befüllens enthält der Silobehälter des Straßensilowagens 2.300 kg pyrogen hergestelltes Siliciumdioxid.

Die Schüttdichte des eingefüllten Siliciumdioxides beträgt 25 g/l und die Stampfdichte 37 g/l.

Nach dem Transport beträgt die Stampfdichte des Siliciumdioxides 35 g/l (Probe : Silowagen vorn) und 36 g/l (Probe : Silowagen hinten).

Die in dem Silobehälter des Straßensilowagens eingebaute Entlüftungsleitung ist ein axial angeordnetes Rohr mit 200 mm Durchmesser und 10 m Länge. Dieses Rohr weist in der Rohrwand verschiedene Öffnungen auf, die mit einem Filtertuch abgedeckt sind.

Die gesamte Filterfläche beträgt 6,3 m². Der Druck der Oberluft beträg 0,6 bar und der Staudruck 0,8 bis 1,0 bar.

## Anspruch

Fahrzeugsilo mit im wesentlichen horizontaler Längsachse zum Befüllen mit pyrogen hergestellten Oxiden von Metall oder Metalloiden mit einer unter Unterdruck stehenden Entlüftungsvorrichtung, die die Förderluft absangt, dadurch gekennzeichnet, dass die Entlüftungsvorrichtung ein parallel zur Silolängsachse verlaufende unter Unterdruck stehendes Entlüftungsrohr aufweist, das in seiner Rohrwand mehrere mit einem Filtertuch abgedeckte Öffnungen hat und zum Entfernen der zwischen den Oxidteilchen vorhandenen Luft dient.

## Claim

A vehicle silo having a substantially horizontal longitudinal axis for filling with pyrogenically produced oxides of metal or metalloids, having a deaeration device which is under low pressure and removes by suction the conveyed air, characterised in that the deaeration device has a ventilating pipe which is under low pressure and extends parallel to the longitudinal axis of the silo and has several openings in its pipe wall which are covered with a filter cloth and is used for removing the air between the oxide particles.

**Revendication**

Camion-silo à axe longitudinal essentiellement horizontal destiné à charger des oxydes de métaux ou métalloïdes fabriqués par la voie pyrogène, comportant un dispositif de désaération se trouvant sous pression réduite, et qui aspire l'air servant à amener l'oxyde, camion-silo caractérisé en ce que le dispositif de désaération présente un tube de désaération se trouvant sous pression réduite, disposé parallèlement à l'axe longitudinal du silo, qui comporte sur sa paroi de nombreux orifices recouverts d'un tissu filtrant et qui sert à l'élimination de l'air emprisonné entre les particules d'oxyde.